# EUROPEAN PATENT APPLICATION

(11) **EP 4 414 343 A1**
(43) Date of publication of application: **14.08.2024**
(21) Application number: 22878454.2
(22) Date of filing: 30.09.2022
(51) Int. Cl.: C04B 35/50, H01G 4/30

(54) **DIELECTRIC POWDER FOR CERAMIC CAPACITORS AND CERAMIC CAPACITOR USING SAME**

(30) Priority: 04.10.2021 JP 2021163542
(71) Applicant: Nippon Denko Co.,Ltd., Tokyo 103-8282 (JP)
(72) Inventor: HIRABARU, Hikaru, Tokyo 103-8282 (JP)
(74) Representative: Kraus & Lederer PartGmbB
(86) International application number: PCT/JP2022/036836
(87) International publication number: WO 2023/058585

(57) **Abstract**

Provided is a dielectric material for ceramic capacitors, which has low temperature dependence and a high relative permittivity. A dielectric powder for ceramic capacitors, comprising a powder of a composite oxide having a garnet-type or garnet-type-like crystal structure containing essential elements of Li, La, Zr, and O, having Li site vacancies obtained by substituting some of the essential elements by an additive element different from the essential elements, and having an ion conductivity at room temperature of 1×10⁻⁵ S/cm or more, and a dielectric material for ceramic capacitors obtained by sintering the dielectric powder.

## Description

### Technical Field

The present invention relates to a dielectric powder for ceramic capacitors and a ceramic capacitor using same.

### Background Art

Examples of electronic parts using ceramics include a capacitor, an inductor, a piezoelectric element, a varistor, and a thermistor. Among these, the capacitor is an electronic part used for obtaining capacitance, and is an important element to constitute an electronic circuit.

A multi-layer ceramic capacitor (MLCC) that is an example of the capacitor includes a plurality of capacitors, is manufactured in, for example, chip form, and is mounted on a printed circuit board for various electronic devices such as a computer and a mobile phone, including video equipment such as a liquid crystal display device. The MLCC can play the role of charging or discharging electricity, and can be used in an element for coupling, decoupling, or impedance matching, or the like.

The basic structure of the MLCC is a structure in which a ceramic dielectric and an internal electrode are laminated, and the ceramic dielectric generally used is a barium titanate BaTiO₃-based dielectric, a calcium zirconate CaZrO₃-based dielectric or the like. In addition, a grain boundary insulated capacitor is sometimes used. This has a structure in which a highly insulating substance is uniformly segregated in the grain boundary areas of semiconductor ceramics, and utilizes multiple functions of crystal grains and grain boundaries.

On the other hand, it has been disclosed to use a lithium ion conductor oxide as the above dielectric to prepare a capacitor.

Patent Literature 1 discloses that by using an inorganic solid electrolyte having a garnet-type or garnet-type-like crystal structure, a whole solid type electric double layer capacitor having high capacity is shown. This does not use a lithium ion conductor oxide directly as the dielectric but imitates utilization of an electric double layer which is formed at an interface between activated carbon and an electrolytic solution in the conventional electric double layer capacitor, as an operating principle. That is to say, by using an inorganic solid electrolyte instead of the electrolytic solution, formation of an electric double layer at the interface between the inorganic solid electrolyte and the electrode has been attempted.

Patent Literature 2 discloses a solid ion capacitor which can keep a grain boundary resistance component down as long as the number of grains present in the thickness direction of a solid electrolyte sandwiched between electrodes is one or more and the average number of grains is 80 or less, thereby increases an ion conductivity, and exhibits a high dielectric relaxation frequency.

Patent Literature 3 discloses a capacitor which can improve a volume capacity density while keeping insulation property because 5 to 50 solid electrolyte particles on the average are present along the thickness direction of a solid electrolyte layer. The volume capacity of the capacitor is 100 mF/cm³ or more, and a maximum volume capacity of 206 mF/cm³ is obtained.

Patent Literature 4 discloses an electric double layer capacitor in which a lithium halide compound is allowed to be present among oxide-based lithium ion conductor particles. By adopting such a structure, a higher capacity and safety are considered to be compatible with each other.

Here, as the crystal structures of the garnet-type type oxide Li₇La₃Zr₂O₁₂ (referred to as LLZ hereinafter), cubic crystal and tetragonal crystal mainly exist. It is known that by substituting a specific element to constitute LLZ by another element, LLZ of cubic crystal is stabilized and has a high ion electroconductivity (ion conductivity) .

For example, in Non Patent Literature 1, it is reported that regarding the crystal structure of LLZ, the elements Li occupy Li1 and Li2 sites that are two crystallographic sites, and they are located at a tetrahedral 24d site and a distorted octahedral 96h site, respectively, and the occupancies of the Li sites are Li1=0.97 and Li2=0.349, but according to the principle of charge neutrality, 7/15 of the Li sites are filled with Li ions, and 8/15 thereof are Li ion vacancies. It is reported that regarding the conduction path of Li ions in LLZ, the Li ions move along Li2 -> Li1 -> Li2 sites by way of the Li1 site, and a three-dimensional network of the Li ion movement path is formed in the LLZ structure.

In Non Patent Literature 2, it is reported that when LLZ is substituted by Ga, Ga substitutes some of Li1 positions of the elements Li, and by introducing Li vacancies due to a difference in charge between Li⁺ and Ga³⁺, cubic LLZ having a high ion conductivity can be formed.

### Citation List

### Patent Literature

Patent Literature 1: JP2014-93454 A
Patent Literature 2: JP2015-5739 A
Patent Literature 3: JP2018-41902 A
Patent Literature 4: JP2018-174181 A

### Non Patent Literature

Non Patent Literature 1: J. Awaka et al., Chem. Lett., 2011, 40, 60-62
Non Patent Literature 2: C. Bernuy-Lopez et al., Chem. Mater., 2014, 26, 3610-3617

### Summary of Invention

### Technical Problem

Recently, higher functionality, higher efficiency and miniaturization are required for electronic equipment, and also for ceramic electronic parts such as a multi-layer ceramic capacitor installed in an electronic device, high performance and miniaturization are required, and further, characteristics of low temperature dependence are required.

The material used for a dielectric of a ceramic capacitor is, for example, BaTiO₃, as described above. At room temperature, BaTiO₃ of tetragonal crystal is stable and exhibits a relative permittivity of 1000, and at around 130°C that is Curie temperature, it undergoes transition from tetragonal crystal to cubic crystal and exhibits a high relative permittivity of about 20000, but its temperature change is extremely large. By adding CaZrO₃, Nb₂O₅, Bi₂O₃ or the like to BaTiO₃, a steep change of relative permittivity of the BaTiO₃ at Curie temperature can be suppressed, but the relative permittivity becomes as extremely low as 1500 to 3500 as compared with a relative permittivity of BaTiO₃ at Curie temperature.

On the other hand, a dielectric material with a small temperature change of relative permittivity, which is used for a ceramic capacitor, is for example CaZrO₃. However, the relative permittivity of such a paraelectric material is as considerably low as 20 to 300.

Therefore, it is an object of the present invention to provide a novel material used for a dielectric of a ceramic capacitor, which has low temperature dependence and a high relative permittivity, and a ceramic capacitor using same.

As previously described, it is thought that from an oxide-based lithium ion conductor, a capacitor (solid ion capacitor) in which an electric double layer has been formed at the electrode interface similarly to a liquid lithium ion electrolyte can be prepared (e.g., Patent Literatures 1 to 4). Generally, when ions are aligned at the interface between an electrode and an electrolyte (ion conductor), instead of a dielectric, in the electric double layer capacitor, the capacitor becomes in a state equivalent to the state where an external potential is given to a dielectric of a common capacitor, and has capacitance. Accordingly, the electric double layer capacitors using an oxide-based lithium ion conductor, such as Patent Literatures 1 to 4, have been designed to effectively form an electric doubly layer, that is, to increase an interface between the electrode and the electrolyte to efficiently align positive and negative ion pairs at the interface. In other words, in the above-mentioned Patent Literatures 1 to 4, LLZ is used as one of the oxide-based lithium ion conductor serving as an electrolyte of an electric double layer capacitor, but there is neither description nor suggestion about designing of LLZ similarly to a conventional dielectric such as BaTiO₃ to prepare a material used for a dielectric of a ceramic capacitor.

### Solution to Problem

Then, the present inventors have earnestly studied in order to solve the above problem, and as a result, they have found that when a composite oxide LLZ having a garnet-type or garnet-type-like crystal structure containing essential elements of Li, La, Zr, and O has Li site vacancies obtained by substituting some of the essential elements by a prescribed additive element different from the essential elements, it becomes available as a novel dielectric material for ceramic capacitors which has a high relative permittivity, and they have completed the present invention.

Although the details are described later, the present inventors have thought that in order to allow LLZ to serve as an excellent dielectric material, dielectric polarization due to the Li site vacancies and the Li ions is formed in response to the applied electric field, and from the viewpoint of relative permittivity, they have found the above requirements.

The gist of the present invention is as follows.
(1) A dielectric powder for ceramic capacitors used for a dielectric of a ceramic capacitor, the dielectric powder comprising a powder of a composite oxide having a garnet-type or garnet-type-like crystal structure containing essential elements of Li, La, Zr, and O, and having Li site vacancies obtained by substituting some of the essential elements by an additive element different from the essential elements, wherein
   in the case where the additive element is an additive element A for substituting some of the elements Li, a substitution ratio of the additive element A for the element Li is 2.6% or less when a ratio of the Li site vacancies is less than 53%, and a substitution ratio of the additive element A for the element Li is 21% or less when a ratio of the Li site vacancies is 53% or more, and
   an ion conductivity at room temperature is 1×10⁻⁵ S/cm or more.
(2) The dielectric powder for ceramic capacitors according to (1), wherein the additive element is an additive element A for substituting some of the elements Li, an additive element B for substituting some of the elements La, an additive element C for substituting some of the elements Zr, or consists of a combination of two or more of these additive elements A to C.
(3) The dielectric powder for ceramic capacitors according to (1) or (2), wherein the ratio of the Li site vacancies is 41% or more and 72% or less.
(4) The dielectric powder for ceramic capacitors according to any one of (1) to (3), wherein the ion conductivity at room temperature is 3×10⁻⁴ S/cm or more.
(5) The dielectric powder for ceramic capacitors according to any one of (1) to (4), wherein the additive element A has a d electron and is in cationic state in which octahedral coordination selectivity by stabilization of a ligand field of oxygen anions becomes 50 kJ/mol or more, and a mole ratio of the additive element A to the essential element La, A/La, is 0.01 or more and 0.50 or less.
(6) The dielectric powder for ceramic capacitors according to any one of (2) to (5), wherein an ionic radius of cation of the additive element B is 0.8 times or more the ionic radius of cation of the essential element La.
(7) The dielectric powder for ceramic capacitors according to any one of (2) to (6), wherein the additive element B comprises at least Ba or Sr, or both of Ba and Sr.
(8) The dielectric powder for ceramic capacitors according to any one of (2) to (7), wherein a valence of cation of the additive element C is a valence of cation of the essential element Zr or higher.
(9) The dielectric powder for ceramic capacitors according to any one of (2) to (8), wherein the additive element C comprises at least Nb or Ta, or both of Nb and Ta.
(10) The dielectric powder for ceramic capacitors according to any one of (1) to (9), wherein the additive element A has a d electron and is in cationic state in which octahedral coordination selectivity by stabilization of a ligand field of oxygen anions becomes 60 kJ/mol or more.
(11) The dielectric powder for ceramic capacitors according to any one of (1) to (10), wherein the additive element A is contained in divalent cationic state.
(12) The dielectric powder for ceramic capacitors according to any one of (1) to (11), wherein a lattice constant of the crystal structure is 12.93 Å or more.
(13) A dielectric material for ceramic capacitors obtained by sintering the dielectric powder for ceramic capacitors according to any one of (1) to (12).
(14) The dielectric material for ceramic capacitors according to (13), wherein the number N of grain boundaries satisfies N = 5 or more.
(15) A ceramic capacitor comprising the dielectric material for ceramic capacitors according to (13) or (14) .

### Advantageous Effects of Invention

According to the present invention, a relative permittivity of a composite oxide LLZ can be increased, and it becomes possible to use the composite oxide as a novel dielectric material for ceramic capacitors. Moreover, since the composite oxide LLZ of the present invention can suppress temperature dependence of relative permittivity, a multi-layer ceramic capacitor having excellent temperature dependence and capable of being miniaturized while having high capacity can be manufactured.

### Description of Embodiments

Hereinafter, the present invention will be described in detail.

The dielectric powder for ceramic capacitors (sometimes referred to as a dielectric powder simply hereinafter) of the present invention is a composite oxide having a garnet-type or garnet-type-like crystal structure containing essential elements of Li, La, Zr, and O, has Li site vacancies obtained by substituting some of the essential elements by a prescribed element different from the essential elements, and has an ion conductivity at room temperature of 1×10⁻⁵ S/cm or more. By adopting such constitution, a dielectric material having low temperature dependence and a high relative permittivity can be prepared. On that account, when the present dielectric powder is used, a multi-layer ceramic capacitor having excellent temperature stability and capable of being miniaturized while having high capacity can be obtained.

First, the site will be described.

The site refers to a crystallographically equivalent lattice position. When a certain atom is present at the lattice position, it is said that a site is occupied, and the site is called an occupied site, while a site where any atom is not present is called a vacancy site.

For example, in LLZ, 5 occupied sites are present, and they are called a Li1 site, a Li2 site, a La site, a Zr site, and an O site. They are sometimes called a tetrahedral 24d site, a distorted octahedral 96h site, a dodecahedral 24c site, an octahedral 16a site, a 96h site and the like. In an ideal garnet structure, the Li2 sites can be considered to be located at the two equivalent positions (96h) a little misaligned from the center of a LiOe hexahedron, which are inside the distorted octahedron, or at the center (48g) thereof.

By using Rietveld analysis or the like of a powder X-ray diffraction pattern, it is possible to specify an occupied site together with a space group of crystals. A statistic ratio at which certain atoms occupy the sites refers to a site occupancy or an occupancy simply, and a ratio of vacancies to all lattice points which certain atoms can occupy refers also to a vacancy ratio. Details of determination of the Li site vacancy ratio are as shown in Examples.

Polarizations of dielectrics mainly include 3 types of orientation polarization, ionic polarization, and electronic polarization. The dielectric material for ceramic capacitors used in the present embodiment undergoes ionic polarization by applying an electric field and exhibits a high relative permittivity, and plus (positive) and minus (negative) charges of the Li⁺ ions and the Li site vacancies are biased by the electric field to form dielectric polarization. That is to say, it is not that ions move to the electrode interface and are aligned like the electric double layer, but the positions of the Li⁺ ions and the Li site vacancies present in the crystal lattice are misaligned by the applied electric field (electric field produced) to form polarization (dielectric polarization) Therefore, in the dielectric material for ceramic capacitors of the present invention, not only the presence of the Li⁺ ion but also the presence of the Li site vacancy is important in order to obtain a high relative permittivity.

In general, a dielectric degree of a dielectric material is represented by a relative permittivity that is a ratio to a permittivity of vacuum. The capacitance of a capacitor is proportional to a relative permittivity and an area of an electrode, and is inversely proportional to a distance between electrodes. On this account, as the relative permittivity of a dielectric material is increased, the capacitance of a capacitor becomes larger.

The dielectric relaxation frequency is proportional to the reciprocal of a product of internal resistance and capacitance of a capacitor. On this account, in order to increase the dielectric relaxation frequency, the internal resistance needs to be lowered, or the capacitance needs to be decreased.

In the aforesaid Patent Literature 2, an electric double layer is formed, that is, ions of an electrolyte move and are aligned at the electrode interface to form an electric double layer, so that the dielectric relaxation frequency tends to be decreased, and in order to increase the dielectric relaxation frequency, lowering of resistance of a grain boundary having high resistance (becomes a barrier to ion conduction) in the electrolyte, or reduction of the number of grain boundaries is carried out. This becomes capacitor design in the case of such a mechanism as allows ions of electrolyte to move up to the electrode interface.

On the other hand, the dielectric powder for ceramic capacitors of the present invention is a dielectric that undergoes dielectric polarization due to the Li⁺ ions and the Li site vacancies, as previously described, and therefore, grain boundary resistance does not need to be lowered, or the number of grain boundaries does not need to be reduced. It is rather better that when a ceramic capacitor is formed using the dielectric material for ceramic capacitors of the present invention, the grain boundary resistance is increased or the number of grain boundaries is increased so that the Li⁺ ions and the Li site vacancies would not move beyond the LLZ crystal grains. In the dielectric, as the response of the dielectric polarization formed by the positional misalignment of the Li⁺ ions and the Li site vacancies in the LLZ crystal grains is improved, the dielectric relaxation frequency can be increased, and therefore, the Li⁺ ions and the Li site vacancies in the LLZ crystal grains preferably move more easily, that is, the ion conductivity is preferably higher, as described later. As they move more easily (as the mobility barrier is smaller), larger dielectric polarization is formed, so that a dielectric material having a higher relative permittivity can be prepared.

Accordingly, when the number N of grain boundaries in the present invention is represented by the thickness T of the dielectric material for ceramic capacitors (thickness between electrodes) and the crystal grain size S, N = T/S-1 is obtained, and N = 5 or more is preferable, N = 20 or more is even more preferable, and N = 50 or more is even more preferable. In the case of T = 200 µm or more, N = 10 or more is preferable, N = 25 or more is even more preferable, and N = 100 or more is even more preferable. In the case of T = less than 200 µm, N = 3 or more is preferable, and N = 5 or more is even more preferable. Such number N of grain boundaries is the number obtained when the dielectric powder of the present invention is sintered to form a dielectric material composed of a sintered body. When the number N of grain boundaries is determined, a sample obtained by cutting a dielectric material for ceramic capacitors in the thickness direction and abrading it is observed with a scanning electron microscope SEM (cross-sectional SEM observation), and a grain diameter of the sintered crystal grain is measured. The crystal grain diameter is an equivalent circle diameter. An average of 30 crystal grains is regarded as the crystal grain size S. From the aforesaid equation, the number N of grain boundaries is calculated to specify the number N.

The number N of grain boundaries can be determined by appropriately setting a particle diameter of a raw material powder for preparing a sintered body, a firing temperature, a firing time, a sintering aid, etc.

By using a solid electrolyte having a high ion conductivity, the dielectric relaxation frequency can be increased. In other words, an increase in the dielectric relaxation frequency means that charge and discharge can be carried out at a higher speed, and has a meaning equivalent to an increase in the speed of charge and discharge of a capacitor. Accordingly, the lithium ion conductivity of the dielectric powder for ceramic capacitors of the present invention is preferably higher. Specifically, the lithium ion conductivity at room temperature is 1×10⁻⁵ S/cm or more, more preferably 3×10⁻⁴ S/cm or more, and even more preferably 1×10⁻³ S/cm or more. In addition, the crystal structure of the composite oxide LLZ that is the dielectric powder for ceramic capacitors of the present invention is stable and does not change at around 200°C (for example, BaTiO₃ undergoes transition from tetragonal crystal to cubic crystal at around 130°C that is Curie temperature, as previously described), and therefore, temperature dependence of the relative permittivity is suppressed, and a ceramic capacitor having excellent temperature stability can be obtained.

In the present invention, in order to use a composite oxide LLZ as a novel dielectric material for ceramic capacitors, some of essential elements are substituted by an additive element different from the essential elements to allow the LLZ to have Li site vacancies at a prescribed ratio. That is to say, by substituting some of the essential elements by another additive element different from the essential elements, the Li site vacancies are increased or decreased in the crystal structure to improve response of the dielectric polarization caused by the positional misalignment of the Li⁺ ions and the Li site vacancies, and thereby, the relative permittivity can be increased. However, if the Li site vacancy quantity is excessively increased, a high relative permittivity cannot be obtained. As previously described, since a high relative permittivity is obtained by the dielectric polarization due to the Li⁺ ions and the Li site vacancies, Li⁺ ions are necessary to a certain extent, and in order to obtain a high relative permittivity, a balance between the Li⁺ ion quantity and the Li site vacancy quantity is important. From such a viewpoint, the Li site vacancy ratio is preferred to be 41% or more and 72% or less, preferably 45% or more and 65% or less, and more preferably 50% or more and 55% or less.

In the present invention, as the additive element, an additive element A for substituting some of the elements Li that are essential elements, an additive element B for substituting some of the elements La that are also essential elements, or an additive element C for substituting some of the elements Zr that are also essential elements can be used, or a combination of two or more of these additive elements A to C may be used. Among these, the additive element A and the additive element C act as those for forming Li site vacancies, and the additive element B has an action to decrease the Li site vacancies. Particularly preferably, the additive element A for substituting some of the elements Li is used, and the substitution ratio of the additive element A for substituting some of the elements Li is controlled according to the ratio of the Li site vacancies.

The ratio of the Li site vacancies in the stoichiometric composition of Li₇La₃Zr₂O₁₂ is 53%, and the maximum value of a preferred substitution ratio for the elements Li differs between the case of increasing the Li site vacancies from the above value and the case of decreasing the Li site vacancies from the above value. The reason for this is that in the present invention in which a high relative permittivity is obtained by the dielectric polarization due to the Li⁺ ions and the Li site vacancies, the additive element A for substituting the element Li also has influence on the dielectric polarization. That is to say, when Li site vacancies whose ratio is less than 53% are obtained, the La site or the Zr site is substituted by ions of an element having a valence higher than the valence of them, so that the quantity of the additive element A for substituting the element Li cannot be increased so much, and becomes at most 2.6%. On the other hand, when the Li site vacancy ratio is 53% or more, the element Li is simply substituted by an additive element A of divalent or higher ions, and the La site or the Zr site does not need to be substituted. On that account, the La site or the Zr site can be substituted by ions of an element having a valence lower than the valence of them, or both of them can be combined, and therefore, the ratio of the additive element A for substituting the element Li can be set up to 21%. From the viewpoint of a dielectric, the Li site is preferably a dielectric polarization, in which 3 types of Li site vacancy, Li ion, and divalent or higher ion (i.e., ion of additive element A) are present, and a relationship between them is as described above. The above has also been found by the present inventors for the first time.

Specifically, when the Li site vacancy ratio is less than 53%, the substitution ratio of the additive element A for the element Li is set to 2.6% or less, and preferably 2.0% or less. When the Li site vacancy ratio is less than 53%, the substitution ratio is as described above, so that by setting the substitution ratio of the additive element A for the element Li to 2.6% or less, preferred dielectric polarization constitution can be formed, and a high relative permittivity can be obtained. On the other hand, when the Li site vacancy ratio is 53% or more, the substitution ratio of the additive element A for the element Li is set to 21% or less, preferably 19% or less, and even more preferably 5% or less. When the Li site vacancy ratio is less than 53%, the substitution ratio is as described above, so that by setting the substitution ratio of the additive element A for the element Li to 2.6% or less, preferred dielectric polarization constitution can be formed, and a high relative permittivity can be obtained. The substitution ratio of the additive element A for the element Li is determined by carrying out Rietveld analysis of X-ray diffraction measurement data. The present invention includes a case where the substitution ratio of the additive element A for the element Li is 0% and the additive element B or C substitutes other essential elements, but when such substitution of the additive element A for the element Li as above is carried out, the lower limit of the substitution ratio for the element Li is more than 0%, and when the Li site vacancy ratio is less than 53%, it is preferably 0.6% or more, and when the Li site vacancy ratio is 53% or more, it is preferably 0.4% or more, and in these cases, the effect of the additive element A is clearly exerted.

In the present invention, Li ions in the crystal structure of the composite oxide LLZ powder used as a dielectric material for ceramic capacitors occupy Li1 and Li2 sites that are two crystallographic sites, and they are located at a tetrahedral site and a distorted octahedral site, respectively. Regarding the conduction path of Li ions in the LLZ, the Li ions move along Li2 → Li1 -> Li2 sites by way of the Li1 site, and a three-dimensional network of the Li ion conduction path is formed in the LLZ structure. By substituting this LLZ by the additive element A, Li site vacancies are introduced, and the cubic crystal is stabilized to exhibit a high lithium ion electroconductivity, but when the substitution element is located at the Li1 position as in Patent Literature 2, free movement of Li along Li2 - Li1 - Li2 sites is inhibited, and there is a possibility of causing lowering of electroconductivity adversely.

In the present invention, therefore, it is preferable to substitute some of the elements Li by the additive element A that is in cationic state in which octahedral coordination selectivity becomes 50 kJ/mol or more. By using such an additive element A, the Li2 site that is an octahedral site is selectively substituted by the additive element A, and through the coordination-stabilized substitution, the crystal structure can be stabilized. Due to this, the Li charge carrier and Li vacancy ratios can be optimized without inhibiting free movement of Li ions along the Li2 -> Li1 -> Li2 sites, and high dielectric polarization, high ion electroconductivity, and stable characteristics can be imparted, and besides, as compared with the conventional substitution method, the Li vacancy concentration can be increased while ensuring the path of Li ions. Therefore, if the substitution quantity of the additive element A is increased, the ion electroconductivity becomes higher, but if the substitution quantity is excessively increased, the Li content is reduced to excessively decrease conduction carrier ions, so that if the content of the additive element A is increased to a certain extent or more, the ion conductivity is decreased.

In detail, the content of the additive element A is preferably 0.01 or more and 0.50 or less in terms of a mole ratio of A to La, A/La. If the content of the additive element A is less than 0.01 in terms of a mole ratio of A to La, A/La, sufficient electrical conduction property is not stably obtained in some cases for the above reasons. On the other hand, if the content of the additive element A exceeds 0.50 in terms of a mole ratio of A to La, A/La, the Li ions that become conduction carries are excessively decreased as described above, or the substitution ions obstruct the Li ion conduction path, so that sufficient electrical conduction property is not obtained in some cases. The content of the additive element A is more preferably 0.01 or more and 0.35 or less, and even more preferably 0.01 or more and 0.20 or less, in terms of a mole ratio of A to La, A/La.

Here, a specific additive element A is preferably one or more elements selected from Al³⁺, Ga³⁺, Mg²⁺, Co²⁺, V³⁺, Mn³⁺, Ni²⁺, and Cu²⁺. Among these, preferable are V³⁺, Mn³⁺, Ni²⁺, and Cu²⁺ each of which has a d electron and is in cationic state in which octahedral coordination selectivity by stabilization of a ligand field of oxygen anions is 50 kJ/mol or more, and more preferable are Mn³⁺, Ni²⁺, and Cu²⁺ in each of which the above selectivity becomes 60 kJ/mol or more.

The additive element A is preferably in cationic state in which octahedral coordination selectivity (difference in coordination stabilization energy between octahedral coordination and tetrahedral coordination) becomes 50 kJ/mol or more, that is, preferably is in an electronic state (particularly the number of d electrons) or has a valence each satisfying this condition. When stabilization of a crystal field (ligand field) of oxygen anion O²⁻ is compared between tetrahedral coordination and octahedral coordination, the octahedral coordination can be judged to have larger stabilization energy and to be more excellent in octahedral coordination selectivity, and actually, it tends to occupy an octahedral site (position) also in the oxide crystal. A difference in coordination stabilization energy between octahedral coordination and tetrahedral coordination corresponds to this octahedral coordination selectivity.

In the present invention, in addition to such an additive element A as above, the additive element B for substituting some of the essential elements La may be used, the additive element C for substituting some of the essential elements Zr may be used, or both of these additive elements B and C may be included.

Such an additive element B is preferably one or more selected from Ca, Ba, Sr, Ce, Pr, Nd, Sm, Eu, Gd, Tb, Dy, Ho, Er, Tm, Yb, and Lu. By substituting some of the essential elements La by the additive element B, the Li vacancy concentration is decreased to obtain a higher ion electroconductivity, or the crystal lattice of LLZ is expanded to suppress lowering of Li ion electroconductivity as much as possible, and it becomes easier to obtain working effect of the present invention.

Here, the ionic radius of cation of the additive element B is preferably 0.8 times or more the ionic radius of cation of the essential element La. In the case of an element having an ionic radius of less than 0.8 times the ionic radius of La, the ion electroconductivity sometimes tends to be lowered, and the ionic radius is preferably 0.9 times or more, and even more preferably 1.0 times or more.

Regarding the substitution quantity of the additive element B, if the mole ratio of B to La, B/La, significantly exceeds 0.15, the lithium ion conductivity sometimes tends to be lowered, and therefore, the mole ratio B/La is preferably 0.01 or more and 0.13 or less, and the mole ratio B/La is more preferably 0.09 or more and 0.11 or less. As the additive element B, Ba²⁺ or Sr²⁺ is preferably used, and Sr²⁺ is more preferably used, from the viewpoint of expansion of crystal lattice.

The additive element C for substituting some of the essential elements Zr is preferably one or more selected from Sc, Y, Nb, Ta, In, Ge, Sn, and Te. By substituting some of the essential elements Zr by the additive element C, the Li vacancy concentration is increased to obtain a higher ion electroconductivity, and it becomes easier to obtain working effect of the present invention.

The reason for this is thought to be that by producing Li ions or Li vacancies at the Li site in the crystal structure due to a difference in charge between Zr⁴⁺ and the additive element C, the Li ions easily move, and the ion electroconductivity is improved. That is to say, due to this, it becomes easier to obtain working effect of the present invention.

The content of the additive element C is preferably 0.01 or more and 3.0 or less in terms of a mole ratio of C to La, C/La. If the content of the additive element C is less than 0.01 in terms of a mole ratio of C to La, C/La, sufficient electrical conduction property is not stably obtained in some cases for the above reasons. On the other hand, if the content of the additive element C exceeds 3.0 in terms of a mole ratio of C to La, A/La, the Li site vacancy quantity is increased, and a high relative permittivity is not obtained in some cases. The content of the additive element C is more preferably 0.05 or more and 0.45 or less, and even more preferably 0.1 or more and 0.25 or less, in terms of a mole ratio of C to La, C/La. The additive element C is preferably Sc³⁺, Y³⁺, Nb⁵⁺, or Ta⁵⁺. From the viewpoint of Li ion vacancy ratio, it is preferable to use Sc³⁺ or Y³⁺, or both of them among them, and from the viewpoint of electrical conduction property, it is preferable to use Nb⁵⁺ or Ta⁵⁺, or both of them among them.

In the present invention, among the additive elements A, an element having octahedral coordination selectivity (difference in coordination stabilization energy between octahedral coordination and tetrahedral coordination) of 50 kJ/mol or more exhibits a stably increased ion electroconductivity, and the working effect of the present invention is significantly obtained, as described above. The reason for this is that because of substitution having octahedral coordination selectivity, the additive element A can be made to effectively substitute the Li2 site that is an octahedral site. The additive element A contained in the dielectric material for ceramic capacitors is more preferably in cationic state in which octahedral coordination selectivity by stabilization of a ligand field of oxygen anions becomes 60 kJ/mol or more. When the octahedral coordination selectivity of the additive element A is 60 kJ/mol or more, a tendency to fix it to the Li2 site that is an octahedral site becomes stronger, and because of the coordination stabilization, metal ions of the additive element A become difficult to move and stabilize the crystal structure, so that free movement of Li ions is less inhibited, and a more stable and higher ion electroconductivity can be obtained. Furthermore, as the coordination stabilization energy of the metal ions of the additive element A is increased, the metal ions of the additive element A become more difficult to move, and therefore, dielectric polarization due to the Li+ ions and the Li site vacancies is likely to occur and becomes larger, so that a high relative permittivity is obtained.

From the coordination stabilization energy (crystal field stabilization energy CFSE) and the octahedral site selectivity energy (OSPE), similar things to the above can be said. If it is expressed with a crystal field splitting parameter (10 Dq), OSPE (Δ10 Dq) of 2 or more shows octahedral coordination selectivity.

The dielectric powder for ceramic capacitors of the present invention is composed of a composite oxide having a garnet-type or garnet-type-like crystal structure. The garnet-type crystal structure has Ia-3d as a space group, and the garnet-type-like crystal structure is a structure of a crystal group having I41/acd as a space group. The basic composition of the composite oxide of the garnet-type crystal structure containing essential elements of Li, La, Zr, and O is represented by Li₇La₃Zr₂O₁₂, and in order to improve its ion electroconductivity, necessary sites are substituted.

In the present invention, the additive element A is preferably contained so as to substitute some of the essential elements Li, as previously described. By substituting some of the essential elements Li by the additive element A, the composite oxide LLZ becomes more stable, and the ion electroconductivity becomes higher. Regarding whether the additive element A has substituted some of the essential elements Li in the garnet-type or garnet-type-like crystal structure or not, substitution of the additive element A for the position of the essential element Li can be confirmed by, for example, carrying out X-ray diffraction measurement using radiation light and then carrying out Rietveld analysis based on the resulting X-ray diffraction pattern using RIETAN-FP.

In the present invention, the additive element A contained in the dielectric material for ceramic capacitors is more preferably contained in divalent cationic state. It is thought that due to a difference in charge between Li and the additive element A, vacancies are formed at the Li sites in the crystal structure, and the Li ions easily move (easily undergo hopping conduction), so that the ion electroconductivity is improved. That is to say, due to this, it becomes easier to obtain working effect of the present invention. Regarding whether the additive element A is contained in divalent cationic state or not, a valence of the additive element A and the coordination number thereof can be confirmed by, for example, measuring an X-ray absorption amount at an energy near the absorption edge of the additive element A using XAFS (X-ray Absorption Fine Structure).

A lattice constant of the crystal structure of the composite oxide LLZ in the present invention is preferably 12.93 Å or more. As the lattice constant of the garnet-type or garnet-type-like crystal structure is increased, a higher lithium ion electroconductivity tends to be achieved. That is to say, due to this, it becomes easier to obtain working effect of the present invention.

The dielectric powder for ceramic capacitors of the present invention may be prepared by any manufacturing method as long as the requirements of the present invention are satisfied. Examples of the methods include a vapor phase synthesis method such as PVD or CVD, a solid phase reaction method, a spray pyrolysis method, and a wet process such as a coprecipitation method or a sol-gel method.

As an example of the method for manufacturing the composite oxide LLZ in the present invention, a synthesis example of the solid phase reaction method is shown below.

As raw materials, a sulfate, an oxide, a carbonate, a hydroxide, a nitrate, an acetate, an oxalate, a halide and the like of the constituent elements can be used.

For the mixing, a planetary ball mill, a bead mill, a ball mill or the like can be used.

The calcination temperature of the mixture is preferably 900°C or higher and 1200°C or lower though it varies depending on the constituent components or blending (for example, it varies depending on the type of a metal ion that is the additive element).

The calcination time is preferably 5 hours or more and 20 hours or less though it varies depending on the constituent components or blending (for example, it varies depending on the type of a metal ion that is the additive element).

The calcination atmosphere is an atmosphere in which an appropriate oxygen partial pressure is properly given by the constituent components or blending. Examples of such atmospheres include atmospheres of air, nitrogen, argon, and nitrogen or argon in which oxygen partial pressure has been adjusted.

The powder obtained by the calcination may be used as it is, or may be further ground. When the powder is ground, a planetary ball mill, a bead mill, a ball mill or the like can be used. The grain size after the grinding is preferably adjusted to an appropriate grain size according to the use purpose, but in usual, D50 is preferably 0.3 µm or more and 20 µm or less.

As another example of the method for manufacturing the composite oxide LLZ in the present invention, a synthesis example of the spray pyrolysis method is shown below.

Raw materials are not particularly restricted as long as they can be each dissolved in an aqueous solution or an organic solvent, but for example, a carbonate, a hydroxide, a nitrate, an acetate, an oxalate, a halide, a metal alkoxide and the like of the constituent elements to constitute the composite oxide LLZ of the present invention can be used.

As the solvent, water, an alkane, alkane carboxylic acid and/or an alcohol can be used.

The temperature of the spray pyrolysis is usually 200°C or higher and 1200°C or lower though it varies depending on the constituent components, blending, or the solvent concentration (for example, it varies depending on the type of a metal ion that is the additive element).

The diameter of a droplet in the spraying is preferably 0.01 µm or more and 100 µm or less.

The atmosphere of carrier gas is an atmosphere in which an appropriate oxygen partial pressure is properly given by the constituent components or blending. Examples of such atmospheres include atmospheres of air, nitrogen, argon, and nitrogen or argon in which oxygen partial pressure has been adjusted.

The powder obtained by the spray pyrolysis may be used as it is, or may be further ground. When the powder is ground, a planetary ball mill, a bead mill, a ball mill or the like can be used. The grain size after the grinding is preferably adjusted to an appropriate grain size according to the use purpose, but in usual, D50 is preferably 0.3 µm or more and 20 µm or less.

In the present invention, there is no need to lower grain boundary resistance or to reduce the number of grain boundaries like the case of a conventional solid electrolyte to form an electric double layer, or rather, it is desirable to increase resistance of grain boundaries or to increase the number of grain boundaries. On that account, it is preferable to use, as the dielectric material for ceramic capacitors, a sintered body obtained by sintering the dielectric powder for ceramic capacitors obtained as above. In this case, the number N of grain boundaries preferably satisfies N = 5 or more, as previously described. A method for obtaining such a sintered body is not particularly restricted, and for example, using fine grains, sintering is carried out so as not to cause grain growth, but in order to obtain grains having the number N of grain boundaries of 5 or more, it is preferable to use a dielectric powder for ceramic capacitors having an average grain size of 5 µm or less, or to decrease the sintering temperature by using a sintering aid, or to utilize both of them. As the sintering aid among these, low-melting glass, a borate (lithium borate or the like), a phosphate (lithium phosphate or the like) or the like can be used.

In the present invention, a ceramic capacitor can be obtained by using the composite oxide LLZ of the dielectric material for ceramic capacitors. In that case, in the dielectric structure of a capacitor using the dielectric material for ceramic capacitors, a component having high resistance, such as a glass component, may be arranged at the grain boundaries. Due to this, a high-capacity capacitor can be prepared. Moreover, the dielectric grains (crystal grains) of the dielectric structure are preferably smaller because a capacitor having a higher capacity can be prepared.

### Examples

### [Examples 1 to 57, Comparative Examples 1 to 5]

Hereinafter, the present invention will be described with reference to examples and comparative examples. However, the present invention is not limited to these examples.

### (Preparation of dielectric material for ceramic capacitors)

As raw materials of a dielectric material for ceramic capacitors, Li₂CO₃, Al₂O₃, Ga₂O₃, MgO, V₂O₃, Mn₂O₃, CuO, NiO, CoO, La(OH)₃, SrCO₃, BaO, ZrO₂, Ta₂O₅, Nb₂O₅, Sc₂O₃, and Y₂O₃ were used. These raw material powders were weighed and mixed so as to prepare dielectric materials of compositions shown in Tables 1 to 4.

In the mixing of the raw materials, the weighed raw material powders were introduced into a plastic container together with zirconia balls, they were subjected to ball mill mixing in ethanol for 15 hours, and then they were dried to obtain raw material mixtures. In the preparation composition in this case, Li₂CO₃ was contained in an amount larger than that in the desired composition taking occurrence of partial Li deficiency during firing into consideration. Therefore, the preparation composition unsatisfying charge compensation (charge conservation) of the garnet-type crystal structure, however, was made to become composition satisfying charge compensation (chemical formulae described in the column of the dielectric material for ceramic capacitors in Tables 1 to 4) after firing by the occurrence of Li deficiency and/or oxygen deficiency. Regarding the elements other than Li, deficiency does not substantially occur during firing, and the preparation composition ratio is basically maintained even after firing.

The resulting raw material mixtures were each subjected to calcination on a MgO heat-resistant container in the atmosphere or a nitrogen atmosphere at 1100°C over a period of 10 hours to obtain calcination products. Subsequently, these calcination products were each introduced into a nylon pot together with zirconia balls, then ground in ethanol with a planetary ball mill for 2 hours, and thereafter dried to obtain synthetic powders of dielectric materials for ceramic capacitors (Examples 1 to 57). Regarding the resulting dielectric materials for ceramic capacitors, various properties including Li site vacancy ratio (referred to as vacancy ratio simply in the tables) were evaluated by the crystal structure analysis described below. The results are set forth in Tables 1 to 4.

### [Crystal structure analysis]

Using an X-ray diffraction device (Rigaku SmartLab), X-ray diffraction measurements of the synthetic powders of the dielectric materials for ceramic capacitors (Example 1 to 57) obtained above were carried out to obtain X-ray diffraction patterns. The resulting X-ray diffraction patterns were each confirmed to be nearly equal to an X-ray diffraction pattern No. 4422259 (Li₇La₃Zr₂O₁₂, space group: Ia-3d(230)) of CSD (Cambridge Structural Database). Consequently, the dielectric materials for ceramic capacitors (Examples 1 to 57) were each able to be judged to have a garnet-type crystal structure or a garnet-type-like crystal structure.

Furthermore, using a multi-purpose pattern-fitting system RIETAN-FP of Fujio Izumi, Rietveld analysis was carried out based on the resulting X-ray diffraction patterns, then a lattice constant of each sample (synthetic powder) was calculated, and as a result, values shown in Tables 1 to 4 were obtained.

Moreover, regarding each of the synthetic powders obtained above, X-ray diffraction measurement was carried out using radiation light. By carrying out Rietveld analysis based on the resulting X-ray diffraction pattern using RIETAN-FP, substitution of the additive element A for the position of the element Li that was an essential element, substitution of the additive element B for the element La position, and substitution of the additive element C for the element Zr position can be confirmed, and by refining an occupancy at each site of an atom, Li occupancy can be determined. The occupancy is a statistical proportion at which a certain atom occupies the site, and therefore, from this, a ratio of vacancies where atoms were not present was calculated, and as a result, Li site vacancy ratios shown in Tables 1 to 4 were determined. For the Rietveld analysis, RIETAN-FP was used, but other calculation software may be used. A specific method of the Rietveld analysis of Fujio Izumi is shown in Reference Literature 1 (written and edited by Izumi Nakai, Fujio Izumi, "Funmatsu Xsen Kaiseki no Jissai" (practice of powder X-ray analysis, in Japanese), second edition, (2009) Asakura Publishing Co., Ltd.).

By measuring an X-ray absorption amount at an energy near each of the absorption edge of the additive elements A to C using XAFS (X-ray Absorption Fine Structure), valences of the additive elements A to C and the coordination numbers can be confirmed.

Measurements of ion electroconductivities (ion conductivities) and relative permittivities of the resulting dielectric materials for ceramic capacitors (Examples 1 to 57, Comparative Examples 1 to 5) were carried out by preparing sintered bodies in the following manner.

First, to each of the synthetic powders of the dielectric materials for ceramic capacitors, an organic binder having been dissolved in an organic solvent was added to prepare grains. The grains were introduced into a mold having a diameter of 15 mm and press-molded in such a manner that the thickness became about 11.5 mm, thereby obtaining molded bodies of the dielectric materials for ceramic capacitors. Subsequently, the resulting molded bodies were each covered with a calcination powder having the same composition as that of each molded body, and fired in the atmosphere or a nitrogen atmosphere at 1200°C for 4 hours using a powder bed method, thereby obtaining sintered bodies of the dielectric materials for ceramic capacitors (Examples 1 to 57). The upper and lower surfaces of each of the resulting sintered bodies of the dielectric materials for ceramic capacitors (Examples 1 to 57, Comparative Examples 1 to 5) were abraded with sandpaper, and then, various evaluations and measurements shown below were carried out. Examples of the binders include methyl cellulose, ethyl cellulose, polyvinyl alcohol, and polyvinyl butyral. Examples of the organic solvents include ethanol, butanol, and acetone.

### [Relative density]

A mass of each of the sintered bodies of the dielectric materials for ceramic capacitors (Examples 1 to 57, Comparative Examples 1 to 5) was measured, and then, a length of each side or a diameter and a thickness of each of the sintered bodies of dielectric materials for ceramic capacitors were measured in several places using a vernier caliper and a micrometer, and average values were calculated. Using these measured values, a volume of each of the sintered bodies of Examples 1 to 57 was calculated, and from the mass measured above, an apparent density was calculated. After calculation of a theoretical density of each composition, the apparent density was divided by the theoretical density, and the resulting value was multiplied by 100 to give a value as a relative density, and as a result, values shown in Tables 1 to 4 were obtained. Since the binder was thought to have been removed during firing, it was understood that all of each sintered body had become a dielectric material for ceramic capacitors.

### [Measurement of lithium ion electroconductivity and relative permittivity]

On both surfaces of each of the samples (sintered bodies of Examples 1 to 57 and Comparative examples 1 to 5), coating was formed by Au sputtering, and thereafter, alternating current impedance measurement was carried out at a voltage of 100 mV at room temperature using an electrochemical measurement system manufactured by N4L (Newtons4th Ltd.), thereby obtaining a Cole-Cole plot in which the vertical axis represents an imaginary component of the measurement result, and the horizontal axis represents a real component thereof. To an arc-shaped part of this Cole-Cole plot, an approximate arc A is fit, then a distance between two points of intersection of the approximate arc A and the horizontal axis of the graph (line on which the imaginary component is zero) was regarded as resistance, and a lithium ion electroconductivity was calculated. Moreover, from the capacitance given when the frequency was 1 kHz, a relative permittivity was calculated. As a result, values shown in Tables 1 to 4 were obtained.

From the cross-sectional SEM observation of each of the sintered bodies, an equivalent circle diameter of the crystal grain was determined, and the number N of grain boundaries was calculated by the aforesaid method. The thickness of each of the sintered bodies was around 0.5 mm, and a thickness T of each sample (thickness between electrodes) was measured.

**[Table 1]**

| | Compositional formula | Element A | Octahedral selectivity | A/La | Element B | a | Element C | C/La | Relative density | Electroconductivity | Lattice constant | Substitution ratio of element A (%) | Li vacancy ratio | Relative permittivity | The number of grain N boundaries |
|---|---|---|---|---|---|---|---|---|---|---|---|---|---|---|---|
| | | | (kj/mol) | | | | | | (%) | (S/cm) | (Å) | | (%) | | |
| Example 1 | Li_{6.76}Al_{0.08}La₃Zr₂O₁₂ | Al | | 0.03 | | 0.00 | | 0.00 | 85 | 1.3×10⁻⁵ | 12.979 | 1.1% | 54 | 3.4×10⁴ | 24 |
| Example 2 | Li_{6.76}Ga_{0.08}La₃Zr₂O₁₂ | Ga | | 0.03 | | 0.00 | | 0.00 | 84 | 2.9×10⁻⁵ | 12.980 | 1.1% | 54 | 4.2×10⁴ | 24 |
| Example 3 | Li_{6.6}La₃Zr_{1.6}Nb_{0.4}O₁₂ | | | 0.00 | | 0.00 | Nb | 0.25 | 85 | 2.6×10⁻⁴ | 12.981 | 0.0% | 56 | 6.1×10⁴ | 23 |
| Example 4 | Li_{6.6}La₃Zr_{1.6}Ta_{0.4}O₁₂ | | | 0.00 | | 0.00 | Ta | 0.25 | 87 | 2.1×10⁻⁴ | 12.981 | 0.0% | 56 | 5.8×10⁴ | 23 |
| Example 5 | Li_{6.84}Co_{0.08}La₃Zr₂O₁₂ | Co | 29 | 0.03 | | 0.00 | | 0.00 | 80 | 1.2×10⁻⁵ | 12.980 | 1.1% | 54 | 7.9×10⁴ | 22 |
| Example 6 | Li_{6.99}V_{0.01}La₃Zr_{1.995}O₁₂ | V | 54 | 0.00 | | 0.00 | | 0.00 | 80 | 1.3×10⁻⁵ | 12.980 | 0.1% | 53 | 1.2×10⁵ | 22 |
| Example 7 | Li_{6.95}V_{0.03}La₃Zr_{1.99}O₁₂ | V | 54 | 0.01 | | 0.00 | | 0.00 | 79 | 1.3×10⁻⁵ | 12.980 | 0.4% | 53 | 1.3×10⁵ | 22 |
| Example 8 | Li_{6.8}V_{0.08}La₃Zr_{1.99}O₁₂ | V | 54 | 0.03 | | 0.00 | | 0.00 | 81 | 1.4×10⁻⁵ | 12.980 | 1.1% | 54 | 1.3×10⁵ | 22 |
| Example 9 | Li_{3.5}V_{1.3}La₃Zr_{1.9}O₁₂ | V | 54 | 0.43 | | 0.00 | | 0.00 | 80 | 1.6×10⁻⁵ | 12.979 | 18.6% | 68 | 5.7×10⁴ | 8 |
| Example 10 | Li_{6.97}Mn_{0.01}La₃Zr₂O₁₂ | Mn | 92 | 0.00 | | 0.00 | | 0.00 | 80 | 1.3×10⁻⁵ | 12.980 | 0.1% | 53 | 1.5×10⁵ | 22 |
| Example 11 | Li_{6.91}Mn_{0.03}La₃Zr₂O₁₂ | Mn | 92 | 0.01 | | 0.00 | | 0.00 | 82 | 1.3×10⁻⁵ | 12.980 | 0.4% | 54 | 1.6×10⁵ | 22 |
| Example 12 | Li_{6.76} Mn_{0.08}La₃Zr₂O₁₂ | Mn | 92 | 0.03 | | 0.00 | | 0.00 | 81 | 1.4×10⁻⁵ | 12.980 | 1.1% | 54 | 1.6×10⁵ | 21 |
| Example 13 | Li_{3.1}Mn_{1.3}La₃Zr₂O₁₂ | Mn | 92 | 0.43 | | 0.00 | | 0.00 | 83 | 1.6×10⁻⁵ | 12.979 | 18.6% | 71 | 3.7×10⁴ | 5 |
| Example 14 | Li_{6.98}Ni_{0.01}La₃Zr₂O₁₂ | Ni | 84 | 0.00 | | 0.00 | | 0.00 | 81 | 1.3×10⁻⁵ | 12.981 | 0.1% | 53 | 1.7×10⁵ | 22 |
| Example 15 | Li_{6.94}Ni_{0.03}La₃Zr₂O₁₂ | Ni | 84 | 0.01 | | 0.00 | | 0.00 | 80 | 1.4×10⁻⁵ | 12.981 | 0.4% | 54 | 1.8×10⁵ | 22 |
| Example 16 | Li_{6.84}Ni_{0.08}La₃Zr₂O₁₂ | Ni | 84 | 0.03 | | 0.00 | | 0.00 | 80 | 1.5×10⁻⁵ | 12.980 | 1.1% | 54 | 1.7×10⁵ | 22 |
| Example 17 | Li_{4.4}Ni_{1.3}La₃Zr₂O₁₂ | Ni | 84 | 0.43 | | 0.00 | | 0.00 | 81 | 1.6×10⁻⁵ | 12.980 | 18.6% | 62 | 1.0×10⁵ | 14 |
| Example 18 | Li_{6.98}Cu_{0.01}La₃Zr₂O₁₂ | Cu | 63 | 0.00 | | 0.00 | | 0.00 | 81 | 1.3×10⁻⁵ | 12.981 | 0.1% | 53 | 1.7×10⁵ | 22 |
| Example 19 | Li_{6.94}Cu_{0.03}La₃Zr₂O₁₂ | Cu | 63 | 0.01 | | 0.00 | | 0.00 | 80 | 1.3×10⁻⁵ | 12.981 | 0.4% | 54 | 1.7×10⁵ | 22 |

**[Table 2]**

| | Compositional formula | Element A | Octahedral selectivity | A/La | Element B | B/La | Element C | C/La | density | Relative Electroconductivity | Lattice constant | Substitution ratio of element A (%) | Li vacancy ratio | Relative permittivity | The number of grain boundaries N |
|---|---|---|---|---|---|---|---|---|---|---|---|---|---|---|---|
| | | | (kj/mol) | | | | | | (%) | (S/cm) | (Å) | | (%) | | |
| Example 20 | Li_{6.84}Cu_{0.08}La₃Zr₂O₁₂ | Cu | 63 | 0.03 | | 0.00 | | 0.00 | 80 | 1.5×10⁻⁵ | 12.980 | 1.1% | 54 | 1.6×10⁵ | 22 |
| Example 21 | Li_{4.4}Cu_{1.3}La₃Zr₂O₁₂ | Cu | 63 | 0.43 | | 0.00 | | 0.00 | 82 | 1.6×10⁻⁵ | 12.980 | 18.6% | 62 | 1.0×10⁵ | 14 |
| Example 22 | Li_{6.61}Mg_{0.17}V_{0.03}La₃Zr_{1.99}O₁₂ | V, Mg | 54 | 0.07 | | 0.00 | | 0.00 | 88 | 4.1×10⁻⁴ | 12.980 | 2.9% | 55 | 1.8×10⁶ | 24 |
| Example 23 | Li_{6.46}Mg_{0.17}V_{0.08}La₃Zr_{1.99}O₁₂ | V, Mg | 54 | 0.08 | | 0.00 | | 0.00 | 89 | 4.3×10⁻⁴ | 12.980 | 3.6% | 55 | 1.8×10⁵ | 23 |
| Example 24 | Li_{3.16}Mg_{0.17}V_{1.3}La₃Zr_{1.9}O₁₂ | V, Mg | 54 | 0.49 | | 0.00 | | 0.00 | 91 | 5.1×10⁻⁴ | 12.980 | 21.0% | 69 | 6.9×10⁴ | 10 |
| Example 25 | Li_{6.57}Mg_{0.17}Mn_{0.03}La₃Zr₂O₁₂ | Mn, Mg | 92 | 0.07 | | 0.00 | | 0.00 | 90 | 4.2×10⁻⁴ | 12.980 | 2.9% | 55 | 1.8×10⁵ | 24 |
| Example 26 | Li_{6.42}Mg_{0.17}Mn_{0.08}La₃Zr₂O₁₂ | Mn, Mg | 92 | 0.08 | | 0.00 | | 0.00 | 91 | 4.6×10⁻⁴ | 12.980 | 3.6% | 56 | 1.7×10⁵ | 23 |
| Example 27 | Li_{2.76}Mg_{0.17}Mn_{1.3}La₃Zr₂O₁₂ | Mn, Mg | 92 | 0.49 | | 0.00 | | 0.00 | 89 | 5.1×10⁻⁴ | 12.980 | 21.0% | 72 | 9.8×10⁴ | 15 |
| Example 28 | Li_{6.60}Mg_{0.17}Ni_{0.03}La₃Zr₂O₁₂ | Ni, Mg | 84 | 0.07 | | 0.00 | | 0.00 | 90 | 4.3×10⁻⁴ | 12.980 | 2.9% | 55 | 1.8×10⁵ | 24 |
| Example 29 | Li_{6.50}Mg_{0.17}Ni_{0.08}La₃Zr₂O₁₂ | Ni, Mg | 84 | 0.08 | | 0.00 | | 0.00 | 92 | 4.9×10⁻⁴ | 12.980 | 3.6% | 55 | 1.8×10⁵ | 24 |
| Example 30 | Li_{4.06}Mg_{0.17}Ni_{1.3}La₃Zr₂O₁₂ | Ni, Mg | 84 | 0.49 | | 0.00 | | 0.00 | 90 | 5.1×10⁻⁴ | 12.980 | 21.0% | 63 | 1.2×10⁵ | 16 |
| Example 31 | Li_{6.60}Mg_{0.17}Cu_{0.03}La₃Zr₂O₁₂ | Cu, Mg | 63 | 0.07 | | 0.00 | | 0.00 | 89 | 4.2×10⁻⁴ | 12.980 | 2.9% | 55 | 1.8×10⁵ | 24 |
| Example 32 | Li_{6.50}Mg_{0.17}Cu_{0.08}La₃Zr₂O₁₂ | Cu, Mg | 63 | 0.08 | | 0.00 | | 0.00 | 91 | 4.7×10⁻⁴ | 12.980 | 3.6% | 55 | 1.8×10⁵ | 24 |
| Example 33 | Li_{4.06}Mg_{0.17}Cu_{1.3}La₃Zr₂O₁₂ | Cu, Mg | 63 | 0.49 | | 0.00 | | 0.00 | 90 | 5.1×10⁻⁴ | 12.980 | 21.0% | 63 | 1.2×10⁵ | 16 |
| Example 34 | Li_{7.30}La_{2.75}Sr_{0.3}Zr₂O₁₂ | | | 0.00 | Sr | 0.11 | | 0.00 | 84 | 5.3×10⁻⁵ | 12.987 | 0.0% | 51 | 6.0×10⁴ | 24 |
| Example 35 | Li₈La₃ZrYO₁₂ | | | 0.00 | | 0.00 | Y | 1.00 | 85 | 4.2×10⁻⁵ | 12.988 | 0.0% | 47 | 6.4×10⁴ | 23 |
| Example 36 | Li_{8.30}La_{2.7}Sr_{0.3}ZrScO₁₂ | | | 0.00 | Sr | 0.11 | Sc | 1.00 | 86 | 2.3×10⁻⁵ | 12.988 | 0.0% | 45 | 5.7×10⁴ | 21 |
| Example 37 | Li_{8.80}La_{2.7}Sr_{0.3}Zr_{0.5}Sc_{1.5}O₁₂ | | | 0.00 | Sr | 0.11 | Sc | 3.00 | 84 | 1.7×10⁻⁵ | 12.989 | 0.0% | 41 | 3.5×10⁴ | 19 |
| Example 38 | Li_{7.42}Al_{0.08}La_{2.74}Sr_{0.26}Zr_{1.6} Sc_{0.4}O₁₂ | Al | | 0.03 | Sr | 0.09 | Sc | 0.25 | 85 | 1.6×10⁻⁴ | 12.986 | 1.1% | 50 | 9.1×10⁴ | 26 |

**[Table 3]**

| | Compositional formula | Element A | Octahedral selectivity | A/La | Element B | B/La | Element C | C/La | Relative density | Electroconductivity | Lattice constant | Substitution ratio of element A ( %) | Li vacancy ratio | Relative permittivity | The number of grain boundaries N |
|---|---|---|---|---|---|---|---|---|---|---|---|---|---|---|---|
| | | | (kj/mol) | | | | | | (%) | (S/cm) | (Å) | | (%) | | |
| Example 39 | Li_{7.42}Ga_{0.08}La_{2.74}Sr_{0.26} Zr_{1.6}Y_{0.4}O₁₂ | Ga | | 0.03 | Sr | 0.09 | Y | 0.25 | 84 | 1.3×10⁻⁴ | 12.987 | 9.5% | 50 | 9.6×10⁴ | 29 |
| Example 40 | Li_{7.5}La_{2.7}Sr_{0.3}Zr_{1.4}Nb_{0.2} Sc_{0.4}O₁₂ | | | 0.00 | Sr | 0.11 | Nb, Sc | 0.43 | 84 | 8.1×10⁻⁵ | 12.987 | 11.1% | 50 | 8.1×10⁴ | 26 |
| Example 41 | Li_{7.5}La_{2.7}Sr_{0.3}Zr_{1.4}Ta_{0.2} Y_{0.4}O₁₂ | | | 0.00 | Sr | 0.11 | Ta, Y | 0.43 | 85 | 9.0×10⁻⁵ | 12.987 | 11.1% | 50 | 8.7×10⁴ | 26 |
| Example 42 | Li_{7.46}V_{0.04}La_{2.75}Sr_{0.25}Zr_{1.7} Sc_{0.29}O₁₂ | V | 54 | 0.01 | Sr | 0.09 | Sc | 0.15 | 86 | 1.1×10⁻⁴ | 12.986 | 9.1% | 50 | 1.9×10⁵ | 29 |
| Example 43 | Li_{7.46}Mn_{0.04}La_{2.75}Sr_{0.1} Zr_{1.67}Sc_{0.33}O₁₂ | Mn | 92 | 0.01 | Sr | 0.09 | Sc | 0.20 | 85 | 2.1×10⁻⁴ | 12.986 | 9.1% | 50 | 1.9×10⁵ | 29 |
| Example 44 | Li_{7.4}Mn_{0.1}La_{2.7}Sr_{0.3}Zr_{1.6} Sc_{0.4}O₁₂ | Mn | 92 | 0.04 | Sr | 0.11 | Sc | 0.25 | 86 | 5.6×10⁻⁴ | 12.988 | 11.1% | 50 | 1.9×10⁵ | 29 |
| Example 45 | Li_{7.46}Ni_{0.04}La_{2.75}Sr_{0.25} Zr_{1.71}Y_{0.29}O₁₂ | Ni | 84 | 0.01 | Sr | 0.09 | Y | 0.17 | 85 | 1.2×10⁻⁴ | 12.986 | 9.1% | 50 | 1.9×10⁵ | 29 |
| Example 46 | L_{i7.35}Ni_{0.15}La_{2.75}Sr_{0.25}Zr_{1.6} Y_{0.4}O₁₂ | Ni | 84 | 0.05 | Sr | 0.09 | Y | 0.25 | 84 | 3.6×10⁻⁴ | 12.986 | 9.1% | 50 | 2.0×10⁵ | 29 |
| Example 47 | Li_{7.46}Cu_{0.04}La_{2.75}Sr_{0.25} Zr_{1.71}Y_{0.29}O₁₂ | Cu | 63 | 0.01 | Sr | 0.09 | Y | 0.17 | 84 | 2.1×10⁻⁴ | 12.986 | 9.1% | 50 | 2.0×10⁵ | 29 |
| Example 48 | Li_{7.35}Cu_{0.15}La_{2.75}Sr_{0.25} Zr_{1.6}Y_{0.4}O₁₂ | Cu | 63 | 0.05 | Sr | 0.09 | Y | 0.25 | 86 | 4.4×10⁻⁴ | 12.986 | 9.1% | 50 | 2.0×10⁵ | 29 |
| Example 49 | Li_{7.37}Mg_{0.1}V_{0.03}La_{2.75}Sr_{0.25} Zr_{1.68}Sc_{0.31}O₁₂ | V, Mg | 54 | 0.05 | Sr | 0.09 | Sc | 0.19 | 90 | 4.4×10⁻⁴ | 12.986 | 9.1% | 50 | 2.0×10⁵ | 29 |
| Example 50 | Li_{7.37}Mg_{0.1}Mn_{0.03}La_{2.74} Sr_{0.26}Zr_{1.6}Sc_{0.4}O₁₂ | Mn, Mg | 92 | 0.05 | Sr | 0.09 | Sc | 0.25 | 92 | 5.8×10⁻⁴ | 12.987 | 9.5% | 50 | 1.9×10⁵ | 29 |
| Example 51 | Li_{7.35}Mg_{0.1}Mn_{0.05}La_{2.7}Sr_{0.3} Zr_{1.6}Sc_{0.4}O₁₂ | Mn, Mg | 92 | 0.06 | Sr | 0.11 | Sc | 0.25 | 92 | 6.1×10⁻⁴ | 12.987 | 11.1% | 50 | 2.0×10⁵ | 29 |
| Example 52 | Li_{7.37}Mg_{0.1}Ni_{0.03}La_{2.75} Sr_{0.25}Zr_{1.62}Y_{0.38}O₁₂ | Ni, Mg | 84 | 0.05 | Sr | 0.09 | Y | 0.23 | 92 | 7.4×10⁻⁴ | 12.986 | 9.1% | 50 | 2.4×10⁵ | 29 |
| Example 53 | Li_{7.35}Mg_{0.1}Ni_{0.05}La_{2.75} Sr_{0.25}Zr_{1.6}Y_{0.4}O₁₂ | Ni, Mg | 84 | 0.05 | Sr | 0.09 | Y | 0.25 | 94 | 7.7×10⁻⁴ | 12.986 | 9.1% | 50 | 2.5×10⁵ | 29 |
| Example 54 | Li_{7.35}Mg_{0.1}Ni_{0.05}La_{2.75} Ba_{0.25}Zr_{1.6}Y_{0.4}O₁₂ | Ni, Mg | 84 | 0.05 | Ba | 0.09 | Y | 0.25 | 93 | 7.8×10⁻⁴ | 12.986 | 9.1% | 50 | 2.3×10⁵ | 29 |
| Example 55 | Li_{7.37} Mg_{0.1}Cu_{0.03}La_{2.75} Sr_{0.25}Zr_{1.62}Y_{0.38}O₁₂ | Cu, Mg | 63 | 0.05 | Sr | 0.09 | Y | 0.23 | 91 | 6.9×10⁻⁴ | 12.986 | 9.1% | 50 | 2.4×10⁵ | 29 |
| Example 56 | Li7 32 Mg_{0.1}Cu_{0.08}La_{2.72} Sr_{0.28}Zr_{1.6}Y_{0.4}O₁₂ | Cu, Mg | 63 | 0.07 | Sr | 0.10 | Y | 0.25 | 94 | 7.2×10⁻⁴ | 12.987 | 10.3% | 50 | 2.5×10⁵ | 36 |
| Example 57 | Li_{7.32} Mg_{0.1}Cu_{0.08}La_{2.72} Sr_{0.28}Zr_{1.6}Y_{0.4}O₁₂ | Cu, Mg | 63 | 0.07 | Ba | 0.10 | Y | 0.25 | 94 | 7.5×10⁻⁴ | 12.987 | 20.0% | 50 | 2.3×10⁵ | 29 |

**[Table 4]**

| | Compositional formula | Element A | Octahedral selectivity | A/La | Element B | B/La | Element C | C/La | Relative density | Electroconductivity | Lattice constant | Substitution ratio of element A (%) | Li vacancy ratio | Relative permittivity | The number of grain boundaries N |
|---|---|---|---|---|---|---|---|---|---|---|---|---|---|---|---|
| | | | (kj/mol) | | | | | | (%) | (S/cm) | (Å) | | (%) | | |
| Comparative Example 1 | Li₇La₃Zr₂O₁₂ | - | - | 0.00 | - | 0.00 | - | 0.00 | 85 | 3.0.E-06 | 12.980 | 0.0% | 53 | 1.9.E+03 | 10 |
| Comparative Example 2 | Li₇La_{2.9}Sr_{0.1}Zr_{1.9Ta0.1}O₁₂ | - | - | 0.00 | Sr | 0.03 | Ta | 0.05 | 86 | 9.0.E-06 | 12.983 | 0.0% | 53 | 7.9.E+03 | 25 |
| Comparative Example 3 | Li_{2.2}Al_{1.6}La₃Zr₂ O₁₂ | Al | - | 0.53 | - | 0.00 | - | 0.00 | 87 | 9.0.E-07 | 12.980 | 22.9% | 75 | 4.3.E+03 | 22 |
| Comparative Example 4 | L_{i7.3}Al_{0.2}La_{2.1}Sr_{0.9}Zr₂O₁₂ | Al | - | 0.01 | Sr | 0.43 | - | 0.00 | 88 | 2.0.E-05 | 13.003 | 2.9% | 50 | 6.0.E+04 | 12 |
| Comparative Example 5 | Li_{7.45}Al_{0.25}La_{2.5}Sr_{0.5}Zr_{1.3} Y_{0.7}O₁₂ | Al | - | 0.01 | Sr | 0.20 | Y | 0.54 | 88 | 2.5E-05 | 12.993 | 3.6% | 49 | 9.5.E+03 | 20 |

As shown in Tables 1 to 4, Examples 1 to 57 each had Li site vacancies of 41% or more and 72% or less, had a mole ratio of the additive element A to La in the range of 0.01 or more and 0.50 or less, had a relative permittivity of 100000 or more when octahedral coordination selectivity of the additive element A was 50 kJ/mol or more, and exhibited a high relative permittivity. In examples among these Examples 1 to 57, in which the element Li was substituted by the element A, the substitution ratio of the additive element A for the element Li (written as substitution ratio of element A simply in the tables) was 2.6% or less when the Li site vacancy ratio was less than 53%, and the substitution ratio of the additive element A for the element Li was 21% or less when the Li site vacancy ratio was 53% or more. In Tables 1 to 4, the numerical values in the column of A/La are those written taking the number of the second decimal place to be a significant figure.

As shown in Tables 1 to 4, further, Mg had no octahedral coordination selectivity because it had no d electron, but when Mg was substituted, each sample was improved in density and exhibited a relative density of 88% or more, and when Sr, Ba, Sc, or Y was added, each sample had an expanded lattice constant and exhibited a higher ion electroconductivity.

Each of samples having Li site vacancies of 50% or more and 60% or less and having an octahedral coordination selectivity of 60 kJ/mol or more had a relative permittivity of 150000 or more and exhibited a higher relative permittivity.

The dielectric materials for ceramic capacitors of Examples 1 to 57 each had an ion conductivity of 1×10⁻⁵ S/cm or more, but Examples 52 to 57, in which Mg and Sr or Ba had been added and the element A was divalent cation, and which had Li site vacancies of 50%, each had an ion conductivity of 3×10⁻⁴ S/cm or more and a relative permittivity of 230000 or more, and exhibited higher ion conductivity and relative permittivity.

On the other hand, in Comparative Example 1, substitution of the additive element for an essential element was not carried out, and in Comparative Example 2, such substitution by the additive element as referred to in the present invention was not sufficiently carried out, so that effective dielectric polarization was not formed, and the relative permittivity was not able to be increased. In Comparative Example 3, in spite of the high Li site vacancy ratio, the substitution ratio of the additive element A for the element Li was too high, so that the ion electroconductivity or the relative permittivity was not able to be increased, and in Comparative Examples 4 and 5, in spite of the low Li site vacancy ratio, the substitution ratio for the element Li consequently became too high similarly to the above, so that the ion electroconductivity and the relative permittivity were not able to be increased.

As described above, by preparing a ceramic capacitor using the dielectric material for ceramic capacitors according to the present invention, a multi-layer ceramic capacitor having excellent temperature stability and capable of being miniaturized while having high capacity can be manufactured.

## Claims

1. A dielectric powder for ceramic capacitors used for a dielectric of a ceramic capacitor, the dielectric powder comprising a powder of a composite oxide having a garnet-type or garnet-type-like crystal structure containing essential elements of Li, La, Zr, and O, and having Li site vacancies obtained by substituting some of the essential elements by an additive element different from the essential elements, wherein
in the case where the additive element is an additive element A for substituting some of the elements Li, a substitution ratio of the additive element A for the element Li is 2.6% or less when a ratio of the Li site vacancies is less than 53%, and a substitution ratio of the additive element A for the element Li is 21% or less when a ratio of the Li site vacancies is 53% or more, and
an ion conductivity at room temperature is 1×10⁻⁵ S/cm or more.

2. The dielectric powder for ceramic capacitors according to claim 1, wherein the additive element is an additive element A for substituting some of the elements Li, an additive element B for substituting some of the elements La, an additive element C for substituting some of the elements Zr, or consists of a combination of two or more of these additive elements A to C.

3. The dielectric powder for ceramic capacitors according to claim 1 or 2, wherein the ratio of the Li site vacancies is 41% or more and 72% or less.

4. The dielectric powder for ceramic capacitors according to any one of claims 1 to 3, wherein the ion conductivity at room temperature is 3×10⁻⁴ S/cm or more.

5. The dielectric powder for ceramic capacitors according to any one of claims 1 to 4, wherein the additive element A has a d electron and is in cationic state in which octahedral coordination selectivity by stabilization of a ligand field of oxygen anions becomes 50 kJ/mol or more, and a mole ratio of the additive element A to the essential element La, A/La, is 0.01 or more and 0.50 or less.

6. The dielectric powder for ceramic capacitors according to any one of claims 2 to 5, wherein an ionic radius of cation of the additive element B is 0.8 times or more the ionic radius of cation of the essential element La.

7. The dielectric powder for ceramic capacitors according to any one of claims 2 to 6, wherein the additive element B comprises at least Ba or Sr, or both of Ba and Sr.

8. The dielectric powder for ceramic capacitors according to any one of claims 2 to 7, wherein a valence of cation of the additive element C is a valence of cation of the essential element Zr or higher.

9. The dielectric powder for ceramic capacitors according to any one of claims 2 to 8, wherein the additive element C comprises at least Nb or Ta, or both of Nb and Ta.

10. The dielectric powder for ceramic capacitors according to any one of claims 1 to 9, wherein the additive element A has a d electron and is in cationic state in which octahedral coordination selectivity by stabilization of a ligand field of oxygen anions becomes 60 kJ/mol or more.

11. The dielectric powder for ceramic capacitors according to any one of claims 1 to 10, wherein the additive element A is contained in divalent cationic state.

12. The dielectric powder for ceramic capacitors according to any one of claims 1 to 11, wherein a lattice constant of the crystal structure is 12.93 Å or more.

13. A dielectric material for ceramic capacitors obtained by sintering the dielectric powder for ceramic capacitors according to any one of claims 1 to 12.

14. The dielectric material for ceramic capacitors according to claim 13, wherein the number N of grain boundaries satisfies N = 5 or more.

15. A ceramic capacitor comprising the dielectric material for ceramic capacitors according to claim 13 or 14.
